# EUROPEAN PATENT APPLICATION

(11) **EP 4 593 467 A1**
(43) Date of publication of application: **30.07.2025**
(21) Application number: 25153879.9
(22) Date of filing: 24.01.2025
(51) Int. Cl.: H04W 48/02

(54) **AVOIDANCE OF BARRING FOR 1 RX/2 RX DEVICES**

(30) Priority: 25.01.2024 GB 202400966
(71) Applicant: Nokia Technologies Oy, 02610 Espoo (FI)
(72) Inventor: KOSKINEN, Jussi-Pekka, 90420 Oulu (FI); TURTINEN, Samuli Heikki, 91100 Ii (FI); BLUSZCZ, Jakub Janusz, 41-800 Zabrze (PL)
(74) Representative: Samson & Partner Patentanwälte mbB

(57) **Abstract**

An apparatus configured to: receive an indication that an access on a network entity is barred for two receiver branches use; receive an indication that access on the network entity is not barred for one receiver branch use; determine that the apparatus is configured to use the one receiver branch and the two receiver branches; and determine that access on the network entity is not barred for the apparatus. An apparatus configured to: transmit, to a user equipment, an indication that access on a network entity is barred for two receiver branches use; transmit, to the user equipment, an indication that access on the network entity is not barred for one receiver branch use; and receive, from the user equipment, an access request, wherein the user equipment is configured to use the one receiver branch and the two receiver branches.

## Description

### RELATED APPLICATION

This application claims priority to GB Application No. 2400966.4 filed January 25, 2024, which is incorporated herein by reference in its entirety.

### TECHNICAL FIELD

The example and non-limiting embodiments relate generally to access barring and, more particularly, to barring of reduced capability devices that support 1 Rx branch use or 2 Rx branches use.

### BACKGROUND

It is known, in reduced capability device communication in a network, for use of 1 Rx branch and 2 Rx branches to be allowed separately via system information.

### SUMMARY

The following summary is merely intended to be illustrative. The summary is not intended to limit the scope of the claims.

In accordance with one aspect, an apparatus comprising means for performing: receiving an indication that an access on a network entity is barred for two receiver branches use; receiving an indication that access on the network entity is not barred for one receiver branch use; determining that the apparatus is configured to use the one receiver branch and the two receiver branches; and determining that access on the network entity is not barred for the apparatus.

In accordance with one aspect, an apparatus comprising: at least one processor; and at least one memory storing instructions that, when executed by the at least one processor, cause the apparatus at least to: receive an indication that an access on a network entity is barred for two receiver branches use; receive an indication that access on the network entity is not barred for one receiver branch use; determine that the apparatus is configured to use the one receiver branch and the two receiver branches; and determine that access on the network entity is not barred for the apparatus.

In accordance with one aspect, a method comprising: receiving, with a user equipment, an indication that an access on a network entity is barred for two receiver branches use; receiving an indication that access on the network entity is not barred for one receiver branch use; determining that the user equipment is configured to use the one receiver branch and the two receiver branches; and determining that access on the network entity is not barred for the user equipment.

In accordance with one aspect, a non-transitory computer-readable medium comprising program instructions stored thereon for performing at least the following: causing receiving of an indication that an access on a network entity is barred for two receiver branches use; causing receiving of an indication that access on the network entity is not barred for one receiver branch use; determining that a user equipment is configured to use the one receiver branch and the two receiver branches; and determining that access on the network entity is not barred for the user equipment.

In accordance with one aspect, an apparatus comprising means for performing: transmitting, to a user equipment, an indication that access on a network entity is barred for two receiver branches use; transmitting, to the user equipment, an indication that access on the network entity is not barred for one receiver branch use; and receiving, from the user equipment, an access request, wherein the user equipment is configured to use the one receiver branch and the two receiver branches.

In accordance with one aspect, an apparatus comprising: at least one processor; and at least one memory storing instructions that, when executed by the at least one processor, cause the apparatus at least to: transmit, to a user equipment, an indication that access on a network entity is barred for two receiver branches use; transmit, to the user equipment, an indication that access on the network entity is not barred for one receiver branch use; and receive, from the user equipment, an access request, wherein the user equipment is configured to use the one receiver branch and the two receiver branches.

In accordance with one aspect, a method comprising: transmitting, with a base station to a user equipment, an indication that access on a network entity is barred for two receiver branches use; transmitting, to the user equipment, an indication that access on the network entity is not barred for one receiver branch use; and receiving, from the user equipment, an access request, wherein the user equipment is configured to use the one receiver branch and the two receiver branches.

In accordance with one aspect, a non-transitory computer-readable medium comprising program instructions stored thereon for performing at least the following: causing transmitting, to a user equipment, of an indication that access on a network entity is barred for two receiver branches use; causing transmitting, to the user equipment, of an indication that access on the network entity is not barred for one receiver branch use; and causing receiving, from the user equipment, of an access request, wherein the user equipment is configured to use the one receiver branch and the two receiver branches.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a flowchart illustrating steps as described herein; and
FIG. 3 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- A-IoT: ambient Internet of Things
- AMF: access and mobility management function
- BB: broadband
- BFD: bidirectional forwarding direction
- BWP: bandwidth part
- CA: carrier aggregation
- CCCH: common control channel
- CD-SSB: cell defining synchronization signal block
- CG-SDT: configured grant small data transfer
- CPA: conditional primary and secondary cell addition
- CPC: conditional primary and secondary cell change
- cRAN: cloud radio access network
- CU: central unit
- DAPS: dual active protocol stack
- DL: downlink
- DU: distributed unit
- eDRX: enhanced discontinuous reception
- eMBB: enhanced mobile broadband
- eNB (or eNodeB): evolved Node B (for example, an LTE base station)
- EN-DC: E-UTRA-NR dual connectivity
- en-gNB or En-gNB: node providing NR user plane and control plane protocol terminations towards the UE, and acting as secondary node in EN-DC
- eRedCap: enhanced reduced capability
- E-UTRA: evolved universal terrestrial radio access, the LTE radio access technology
- FDD: frequency division duplex
- gNB (or gNodeB): base station for 5G/NR, a node providing NR user plane and control plane protocol terminations towards the UE, and connected via the NG interface to the 5GC
- IAB: integrated access and backhaul
- I/F: interface
- IFRI: intra frequency reselection indication
- IoT: Internet of Things
- L1: layer 1
- LCID: logical channel ID
- LTE: long term evolution
- MAC: medium access control
- MIMO: multiple input multiple output
- MME: mobility management entity
- MR-DC: multi-radio access technology dual connectivity
- NCD-SSB: non-cell defining synchronization signal block
- ng or NG: new generation
- ng-eNB or NG-eNB: new generation eNB
- NR: new radio
- N/W or NW: network
- O-RAN: open radio access network
- PDCP: packet data convergence protocol
- PDSCH: physical downlink shared channel
- PHY: physical layer
- PRACH: physical random access channel
- PUSCH: physical uplink shared channel
- RA: random access
- RACH: random access channel
- RAN: radio access network
- RedCap: reduced capability
- RF: radio frequency
- RLC: radio link control
- RLM: radio link monitoring
- RRC: radio resource control
- RRH: remote radio head
- RRM: radio resource management
- RS: reference signal
- RSRP: reference signal received power
- RU: radio unit
- Rx: receiver
- SCS: subcarrier spacing
- SDAP: service data adaptation protocol
- SDT: small data transfer/transmission
- SGW: serving gateway
- SIB: system information block
- SMF: session management function
- SSB: synchronization signal block
- TDD: time division duplex
- Tx: transmitter
- UE: user equipment (for example, a wireless, typically mobile device)
- UL: uplink
- UPF: user plane function
- VNR: virtualized network function

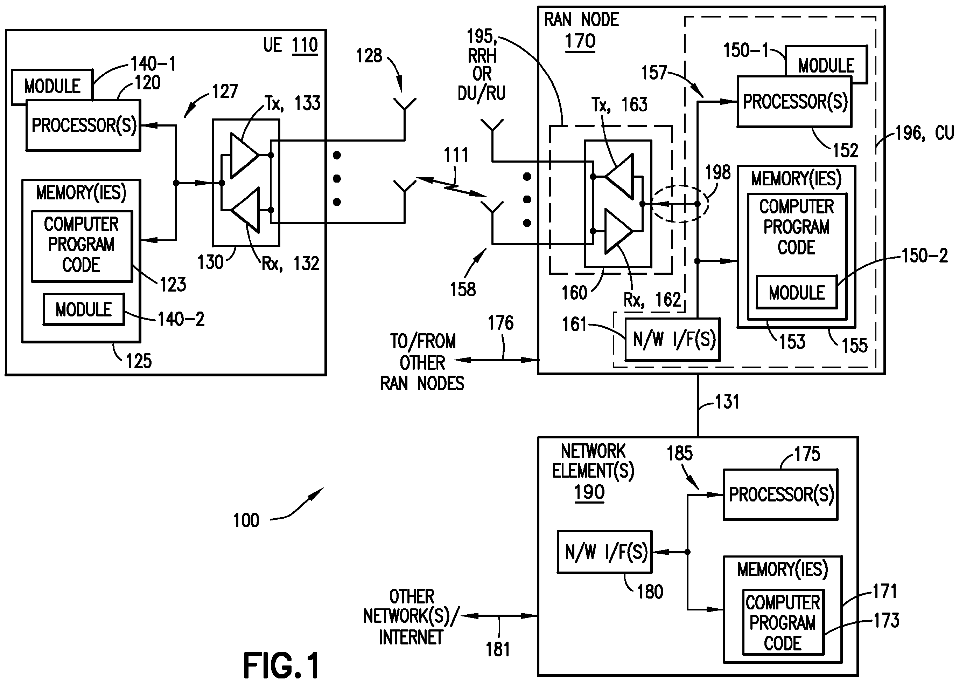

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, for example, as part of a RU, but some examples of this may have the transceiver 160 as part of a separate RU, for example, under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, for example, link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (for example, a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (for example, the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, for example, an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (for example CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (for example cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to reduced capability (RedCap) UEs and/or enhanced reduced capability (eRedCap) UEs. RedCap devices have reduced capabilities versus NR enhanced mobile broadband (eMBB) capable UEs, as they are targeted to serve in Internet of Things (IoT) like scenarios, applying UE complexity reduction, and hence neither support of carrier aggregation (CA) nor or dual connectivity (DC) is mandated. RedCap UEs may have reduced capabilities such as: bandwidth (BW) of 20 MHz for frequency range 1 (FR1), BW of 100 MHz for frequency range 2 (FR2), reduced number of antennas (for example 1Tx antenna, 1 or 2 Rx antenna depending on FR and band), limited peak data rates, etc. RedCap devices may include devices with relatively low complexity, cost, and/or size.

Use cases for RedCap UE and example embodiments of the present disclosure may include, but are not limited to, industrial IoT sensors, wearables, and/or devices used for transportation, tracking, infrastructure, agriculture, smart cities, etc. Wearables may include, but are not limited to, sensors in contact with or near skin, smart fabric, heart rate monitors, temperature monitors, etc.

An important use case for RedCap UE may be for industrial sensors. For this type of device, the battery life may last a few years, and end-to-end latency in connected mode may be less than 100 ms, which may make this type of device somewhat suitable for delay tolerant applications. To minimize power consumption and improve battery life, RedCap industrial sensors may be configured with a relatively infrequent physical downlink control channel (PDCCH) monitoring period (for example every 10-20 ms).

Features as described herein may generally relate to enhanced support of reduced capability NR devices. A work item on enhanced support of reduced capability NR devices has included the following justification:
"... Justification
One 5G aim is to accelerate industrial transformation and digitalization, which improve flexibility, enhance productivity and efficiency, reduce maintenance, and improve operational safety. Industrial sensors play an important role for realizing such a vision. Not only widely used in industrial automation and digitalization use cases, industrial sensors are also widely used in the general environmental monitoring use cases such as monitoring of critical infrastructure (e.g., buildings, bridges, water dams, etc.) or monitoring for natural disasters (e.g., wild fire, flood, tsunami, earthquake, etc.).
Another emerging new class of new 5G use cases is the smart city vertical, which covers data collection and processing to more efficiently monitor and control city resources, and to provide services to city residents. Especially, the deployment of surveillance cameras is an essential part of the smart city but also of factories and industries.
Furthermore, there have been increasing interests in wearables use cases such as smart watches, eHealth related devices, and medical monitoring devices. These use cases call for different design considerations and have different requirements in terms of form factor, UE complexity and energy efficiency, compared to eMBB devices.
The support of industrial sensors, video surveillance, and wearables were the motivations behind Rel-17 RedCap. Through the Rel-17 NR RedCap work item, 3GPP has established a framework for enabling reduced capability NR devices suitable for a range of use cases, including the industrial sensors, video surveillance, and wearables use cases, with requirements on low UE complexity and sometimes also on low UE power consumption.
To further expand the market for RedCap use cases with relatively low cost, low energy consumption, and low data rate requirements, e.g., industrial wireless sensor network use cases, some further complexity reduction enhancements should be considered.
Rel-18 RedCap should provide NR support for low-tier devices between existing LPWA UEs and the capabilities of Rel-17 RedCap UEs. The supported peak data rate for Rel-18 RedCap targets to 10Mbps. Rel-18 RedCap should not overlap with existing LPWA solutions.
The enhancements should be introduced while maintaining the integrity of the RedCap ecosystem and maximizing the benefit of economies of scale. The WI targets enhancements applicable to the RedCap framework defined in Rel-17, including principles of network awareness of device capabilities.
Techniques for further UE complexity reduction have been studied in the study item documented in TR 38.865..."

The work item on enhanced support of reduced capability NR devices also included the following objectives:
"...Objective
The objective is to specify support for the following enhancements:
   Power saving/energy efficiency enhancements
      Enhanced eDRX in RRC_INACTIVE (> 10.24s) [RAN2, RAN3, RAN4]
         Note that this objective requires SA2, CT1 and CT4 involvement Complexity/cost reduction
      Further reduced UE complexity in FR1 [RAN1, RAN2, RAN4]
         UE BB bandwidth reduction
            5 MHz BB bandwidth only for PDSCH (for both unicast and broadcast) and PUSCH, with 20 MHz RF bandwidth for UL and DL The other physical channels and signals are still allowed to use a BWP up to the 20 MHz maximum UE RF+BB bandwidth.
            Support additional separate early indication(s) [RAN1, RAN2]
         UE peak data rate reduction
            Relaxation of the constraint (vLayers·Qm·f ≥ 4) for peak data rate reduction
            The relaxed constraint is, e.g., 1 (instead of 4).
            The parameters (vLayers, Qm, f) can be as in Rel-17 RedCap.
         Both 15 kHz SCS and 30 kHz SCS are supported.
         Aim to define at most one Rel-18 RedCap UE type for further UE complexity reduction.
         The existing UE capability framework is used, and changes to capability signalling are specified only if necessary. By default, all UE capabilities applicable to a Rel-17 RedCap UE are applicable unless otherwise specified.
   Notes:
      The work defined as part of this WI is not to overlap with LPWA use cases. Coexistence with non-RedCap UEs and Rel-17 RedCap UEs should be ensured.
      This WI considers all applicable duplex modes unless otherwise specified. Check in RAN#99 regarding:
         Whether UE peak data rate reduction for UE is limited only with UE BB bandwidth reduction or standalone..."

The work item also included the following description of RedCap and eRedCap NR devices:
"...16.13 Support of Reduced Capability (RedCap) and enhanced Reduced Capability (eRedCap) NR devices
16.13.1 Introduction
A RedCap UE has reduced capabilities with the intention to have lower complexity with respect to non-RedCap UEs. It is mandatory for a RedCap UE to support 20 MHz maximum UE channel bandwidth in FR1 and 100 MHz in FR2. An eRedCap UE has further reduced capabilities with the intention to have lower complexity with respect to RedCap UEs. It is mandatory for an eRedCap UE to support reduced DL/UL peak data rate of 10 Mbps, with or without reduced baseband bandwidth of 5 MHz for unicast PDSCH/PUSCH in FR1.
16.13.2 Capabilities
CA, MR-DC, DAPS, CPA, CPC and IAB related capabilities are not supported by (e)RedCap UEs, as defined together with other limitations in TS 38.306 [11]. It is up to the network to prevent (e)RedCap UEs from using radio capabilities not intended for (e)RedCap UEs.
16.13.3 Identification, access and camping restrictions
A RedCap UE can be identified by the network during Random Access procedure via MSG3/MSGA from a RedCap specific LCID(s) and optionally via MSG1/MSGA (PRACH occasion or PRACH preamble). An eRedCap UE can be identified by the network during Random Access procedure via MSG3/MSGA from an eRedCap specific LCID(s) and optionally via MSG1. For RedCap UE identification via MSG1/MSGA, RedCap specific Random Access configuration may be configured by the network. For eRedCap UE identification via MSG1, eRedCap specific Random Access configuration may be configured by the network. For MSG3/MSGA, an (e)RedCap UE is identified by the dedicated LCID(s) indicated for CCCH identification (CCCH or CCCH1) regardless whether (e)RedCap specific Random Access configuration is configured by the network. (e)RedCap UEs with 1 Rx branch and 2 Rx branches can be allowed separately via system information. In addition, (e)RedCap UEs in Half-Duplex FDD mode can be allowed via system information. A RedCap specific IFRI can be provided in SIB1, when absent, RedCap UEs access is not allowed. An eRedCap specific IFRI can be provided in SIB1, when absent, eRedCap UEs access is not allowed. Information on which frequencies (e)RedCap UE access is allowed can be provided in system information.
An (e)RedCap UE with 1 Rx branch applies the associated offset for broadcasted cell specific RSRP thresholds for random access, SDT, cell edge condition and cell (re)selection criterion as specified in TS 38.133 [13].
NOTE: It is up to the E-UTRA network, if possible, to avoid handover attempts of an (e)RedCap UE to a target NR cell not supporting (e)RedCap. It is up to the (e)RedCap UE implementation, if possible, to recover from handover attempts to a target NR cell not supporting (e)RedCap.
16.13.4 RRM measurement relaxations
RRM measurement relaxation is enabled and disabled by the network. In RRC_IDLE and RRC_INACTIVE an (e)RedCap UE is allowed to relax neighbour cell RRM measurements when the stationary criterion is met or when both stationary criterion and not-at-cell-edge criterion are met. Network may configure stationary criterion for an (e)RedCap UE in RRC_CONNECTED and the UE reports its RRM measurement relaxation fulfilment status using UE Assistance Information when the stationarity criterion is met or no longer met.
16.13.5 BWP operation
An (e)RedCap UE in RRC_IDLE or RRC_INACTIVE monitors paging only in an initial BWP (default or RedCap specific) associated with CD-SSB and performs cell (re-)selection and related measurements on the CD-SSB. If a RedCap-specific initial UL BWP is configured and NUL is selected, (e)RedCap UEs shall use only the RedCap-specific initial UL BWP to perform RACH procedure in RRC_IDLE and RRC_INACTIVE or to perform CG-SDT procedure (as described in clause 18.0) in RRC_INACTIVE.
An (e)RedCap UE may be configured with multiple NCD-SSBs provided that each BWP is configured with at most one SSB. NCD-SSB may be configured for an (e)RedCap UE in RRC_CONNECTED to perform RLM, BFD, and RRM measurements and RA resource selection when the active BWP does not contain CD-SSB.
An (e)RedCap UE may be configured with NCD-SSB for a RedCap-specific initial DL BWP to perform SDT procedure in RRC_INACTIVE (as described in clause 18.0) in case the RedCap-specific initial DL BWP does not contain CD-SSB..."

It may be noted that a (e)RedCap UE may receive with 1Rx branch, 2 Rx branches, or either 1Rx branch or 2 Rx branches.

In the present disclosure, while an example embodiment may refer to a UE, a RedCap UE, or an eRedCap UE, this is not limiting; example embodiments of the present disclosure may be applicable to either or both of a UE, a RedCap UE, or an eRedCap UE.

In the present disclosure, when access is allowed for a UE, the UE may be allowed to camp on a cell provided by a network entity, and may be allowed to initiate access, such as a RRC Setup Request or a RRC Resume Request procedure. Alternatively, the UE may be allowed to transmit a RRC Re-establishment request. Otherwise, the UE may consider the cell as barred (for example, not accessible). In the present disclosure, when a UE is barred, or the UE considers a cell as barred, the UE is not allowed to camp on the cell, nor initiate an access procedure with the network entity providing the cell.

Features as described herein may generally relate to a barring scenario where the network allows access for 1 Rx devices, but bars access for 2 Rx devices; this scenario is allowed by the current specification. In other words, even if a (e)RedCap UE is able to receive with either 1 Rx branch or 2 Rx branches, the UE may, according to current specification, be barred because it is at least enabled to receive with 2 Rx branches.

In the present disclosure, a UE, a cell, a frequency band of a cell, or access to a network entity may be described as "barred". Each of these phrases refer to a scenario in which the UE is not allowed to access the network, or some portion of the network (for example a cell), based on an indication of barring.

(e)RedCap UEs with 1 Rx branch and 2 Rx branches may be allowed separately via system information. The following is specified in TS 38.331:
"...1> if the UE is a RedCap UE and it is in RRC_IDLE or in RRC_INACTIVE, or if the RedCap UE is in RRC_CONNECTED while T311 is running:
2> if intraFreqReselectionRedCap is not present in SIB 1:
   3> consider the cell as barred in accordance with TS 38.304 [20];
   3> perform barring as if intraFreqReselectionRedCap is set to allowed;
2> else:
   **3> if the cellBarredRedCaplRx is present in the acquired SIB1 and is set to barred and the UE is equipped with 1 Rx branch; or**
   **3> if the cellBarredRedCap2Rx is present in the acquired SIB1 and is set to barred and the UE is equipped with 2 Rx branches; or**
   3> if the halfDuplexRedCapAllowed is not present in the acquired SIB 1 and the UE supports only half-duplex FDD operation:
      4> consider the cell as barred in accordance with TS 38.304 [20];
      4> perform barring based on intraFreqReselectionRedCap as specified in TS 38.304 [20];
1> if the UE is an eRedCap UE and it is in RRC_IDLE or in RRC_INACTIVE, or if the eRedCap UE is in RRC_CONNECTED while T311 is running:
2> if intraFreqReselection-eRedCap is not present in SIB 1:
3> consider the cell as barred in accordance with TS 38.304 [20];
3> perform barring as if intraFreqReselection-eRedCap is set to allowed upon which the procedure ends;
2> else:
**3> if the cellBarred-eRedCap1Rx is present in the acquired SIB1 and is set to barred and the UE is equipped with 1 Rx branch; or**
**3> if the cellBarred-eRedCap2Rx is present in the acquired SIB1 and is set to barred and the UE is equipped with 2 Rx branches; or**
3> if the halfDuplexRedCapAllowed is not present in the acquired SIB 1 and the UE supports only half-duplex FDD operation:
4> consider the cell as barred in accordance with TS 38.304 [20];
4> perform barring based on intraFreqReselection-eRedCap as specified in TS 38.304 [20] upon which the procedure ends;

| |
|---|
| ***cellBarred-eRedCapl Rx*** |
| Value *barred* means that the cell is barred for an eRedCap UE with 1 Rx branch, as defined in TS 38.304 [20]. This field is ignored bv non-eRedCap UEs. |
| ***cellBarred-eRedCap2Rx*** |
| Value *barred* means that the cell is barred for an eRedCap UE with 2 Rx branches, as defined in TS 38.304 [20]. This field is ignored bv non-eRedCap UEs. |
| ***cellBarredRedCaplRx*** |
| Value *barred* means that the cell is barred for a RedCap UE with 1 Rx branch, as defined in TS 38.304 [20]. This field is ignored bv non-RedCap UEs. |
| ***cellBarredRedCap2Rx*** |
| Value *barred* means that the cell is barred for a RedCap UE with 2 Rx branches, as defined in TS 38.304 [20]. This field is ignored bv non-RedCap UEs. |

..."

It is noted that, if a RedCap UE receives a system information block (SIB) including an indication that RedCap UEs with 1 Rx branch are barred, relevant RedCap UE are barred from camping on the network. It is noted that, if a RedCap UE receives a SIB including an indication that RedCap UEs with 2 Rx branches are barred, relevant RedCap UE are barred from camping on the network.

It is noted that, if an eRedCap UE receives a SIB including an indication that eRedCap UEs with 1 Rx branch are barred, relevant eRedCap UE are barred from camping on the network. It is noted that, if an eRedCap UE receives a SIB including an indication that eRedCap UEs with 2 Rx branches are barred, relevant eRedCap UE are barred from camping on the network.

TS38.331 specifies that (e)RedCap UEs with 1 Rx branch and 2 Rx branches may be allowed separately via system information.

According to the current specification, a cell may be barred for a UE which is equipped with 1Rx or 2 Rx. Example embodiments of the present disclosure may relate to the problem where the network allows access for 1Rx, but bars access for 2Rx. Some UEs may be able to operate with 1Rx when access for 2Rx is barred (for example a UE may support both 1 Rx and 2 Rx operation). However, access would be barred for such UEs, according to current specification.

In an example embodiment, the UE may determine that the access is allowed / not barred. For example, the UE may determine that, because it supports both 1 Rx and 2 Rx operation, and only 2 Rx operation is barred, its access to the network may be allowed.

In an example embodiment, the UE may determine that the access is allowed / not barred in 1 Rx mode.

In an example embodiment, the UE may consider the cell (or multiple cells) as not barred.

In an example embodiment, the UE may not perform barring. For example, the UE may consider at least one cell, or access to/from a network entity, is not barred while the UE is configured to perform access with 1 Rx branch or 2 Rx branches, and the UE has determined that use of 2 Rx branches is barred, but use of 1 Rx branch to perform access is not barred.

In an example embodiment, the UE may camp on the cell and start operating in 1Rx mode. For example, the UE may transmit, to a network entity providing at least one cell, an RRC setup request, an RRC resume request, a RRC re-establishment request, etc.

In other words, a UE, which may be equipped with 2 Rx antennas but may support both 1 Rx and 2 Rx operation mode, may limit its operation mode to the 1 Rx mode, i.e., using only the 1 Rx branch, while camping on the cell if access is barred for the 2 Rx branch operation mode. The UE may, thus, use only the 1 Rx branch instead of the 2 Rx branches for communicating with the cell at this time because the cell is barred for 2 Rx operation. The UE may be capable to switch its way of operation or may be configured with different operation modes for different frequency bands as described herein.

In an example embodiment, the UE may ignore or disregard the barring for 2Rx. In an example embodiment, the UE may ignore certain barring indication parameters, for example cellBarred-eRedCap2Rx or cellBarredRedCap2Rx. Other portions of a system information that includes the ignored barring indication parameters (for example in one or more fields) may not be ignored. In other words, the UE may not attempt to perform access to the cell using 2 Rx branches, but may attempt to perform access to the cell using 1 Rx branch.

In yet other words, the UE may ignore certain barring indication parameters (e.g., those indicating barring of 2Rx) that would indicate that the cell is barred for the UE because other barring indication parameters (e.g., those indicating allowed access of 1Rx) already indicate that the UE (which supports both operation modes) can access the cell.

In an example embodiment, the UE may support 1Rx in some band(s) (for example a frequency band, a frequency division duplex (FDD) frequency band, a time division duplex (TDD) frequency band, etc.), but not in some other band(s), and the UE may support 2Rx in some band(s), but not in some other band(s). If the network allows access for 1Rx and bars the access for 2Rx, and the UE supports 1Rx on the current band, the UE may determine that access is allowed / not barred. For example, 2 Rx branches use may be barred on a current cell, or on all cells that belong to a certain frequency. For example, 1 Rx branch use may be allowed on a current cell, or on all cells that belong to a certain frequency.

In an example embodiment, the UE may operate in 1RX mode, and may use only 1 Rx branch for reception. In an example embodiment, the UE may operate in 1RX mode using only 1 DL multiple input multiple output (MIMO) layer for reception.

In an example embodiment, the UE may determine whether access is barred or not using one or more of the following barring indications: cellBarred-eRedCap1Rx, cellBarred-eRedCap2Rx, cellBarred- RedCap 1Rx, and/or cellBarred-RedCap2Rx.

In an example embodiment, if a RedCap UE receives a SIB including a cellBarredRedCap2Rx field with a value of barred, the field may be ignored by the RedCap UE if the RedCap UE also supports 1 Rx operation, for example when a SIB is not received that includes a cellBarredRedCaplRx field, or when a SIB is received that includes a cellBarredRedCaplRx field with a value of not barred / allowed.

In an example embodiment, if an eRedCap UE receives a SIB including a cellBarred-eRedCap2Rx field with a value of barred, the field may be ignored by the eRedCap UE if the eRedCap UE also supports 1 Rx operation, for example when a SIB is not received that includes a cellBarred-eRedCap1Rx field, or when a SIB is received that includes a cellBarred-eRedCap1Rx field with a value of not barred / allowed.

A technical effect of example embodiments of the present disclosure may be to enable deterministic UE behavior.

A technical effect of example embodiments of the present disclosure may be to enable a UE supporting 2Rx and 1Rx to camp on the cell when 2Rx is barred and 1Rx is allowed on the cell.

Example embodiments of the present disclosure may be applicable to RedCap UEs. However, this is not limiting; example embodiments of the present disclosure may also be applicable to other types of UEs. For example, example embodiments of the present disclosure may be applicable to IoT devices, and/or ambient IoT (A-IoT) devices. Ambient IoT devices may be described as low power devices, low cost devices, and/or as devices with limited functionality/processing capability. An example of an A-IoT device is a passive radio, which may harness energy from wireless signals sent on specific carriers and/or bandwidths and charge a simple circuitry that, once activated, may emit/reflect a signal, which may encode at least the ID of the passive radio. Other examples of A-IoT devices include semi-passive devices, battery-less devices, and low cost simplified mobile devices. A-IoT devices may be used, for example, for indoor/outdoor positioning.

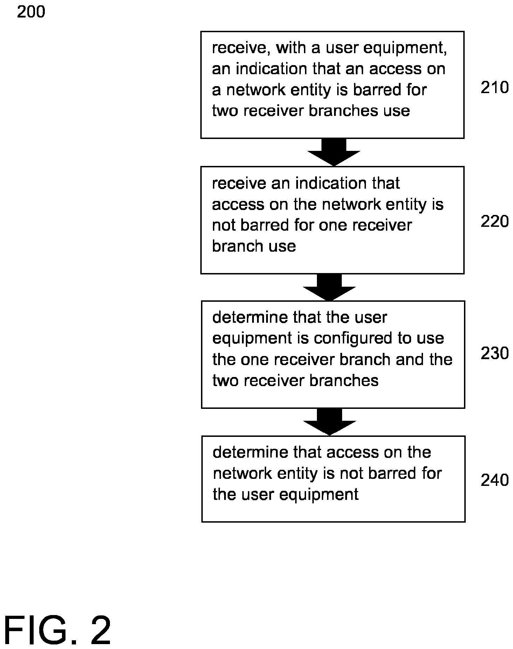

FIG. 2 illustrates the potential steps of an example method 200. The example method 200 may include: receiving an indication that an access on a network entity is barred for two receiver branches use, 210; receiving an indication that access on the network entity is not barred for one receiver branch use, 220; determining that a user equipment is configured to use the one receiver branch and the two receiver branches, 230; and determining that access on the network entity is not barred for the user equipment, 240. The example method 200 may be performed, for example, with a UE, a RedCap UE, an eRedCap UE, a low complexity UE, a low cost UE, etc.

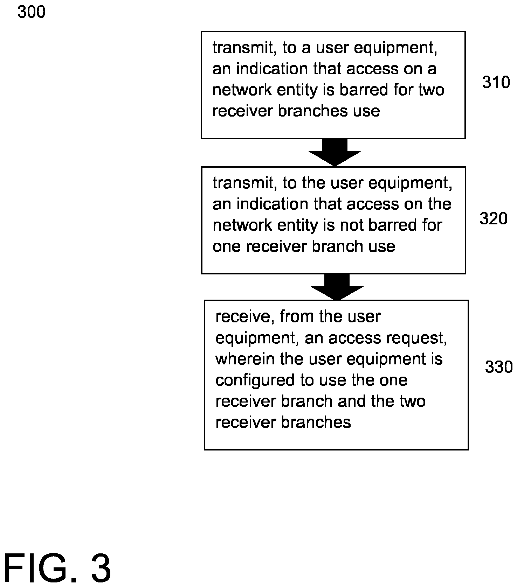

FIG. 3 illustrates the potential steps of an example method 300. The example method 300 may include: transmitting, to a user equipment, an indication that access on a network entity is barred for two receiver branches use, 310; transmitting, to the user equipment, an indication that access on the network entity is not barred for one receiver branch use, 320; and receiving, from the user equipment, an access request, wherein the user equipment is configured to use the one receiver branch and the two receiver branches, 330. The example method 300 may be performed, for example, a base station, a network entity, a network node, a gNB, etc.

In accordance with one example embodiment, an apparatus may comprise: at least one processor; and at least one memory storing instructions that, when executed by the at least one processor, cause the apparatus at least to: receive an indication that an access on a network entity is barred for two receiver branches use; receive an indication that access on the network entity is not barred for one receiver branch use; determine that the apparatus is configured to use the one receiver branch and the two receiver branches; and determine that access on the network entity is not barred for the apparatus.

The indication that the access on the network entity is barred for the two receiver branches use may comprise an indication that the access is barred for the two receiver branches use on at least one of: at least one frequency with respect to the network entity, at least one cell the network entity provides.

The indication that the access on the network entity is not barred for the one receiver branch use may comprise an indication that the access is not barred for the one receiver branch use on at least one of: at least one frequency with respect to the network entity, or at least one cell the network entity provides.

The example apparatus may be further configured to at least one of: camp on a cell of the network entity in response to determining that access on the network entity is not barred for the apparatus; perform an access procedure with respect to the cell; transmit, to the network entity, a radio resource control setup request; transmit, to the network entity, a radio resource control resume request; transmit, to the network entity, a radio resource control re-establishment request; or determine that access to the cell is allowed for the apparatus.

The example apparatus may be further configured to: use the one receiver branch.

The apparatus may be configured to use the one receiver branch on at least one first frequency band, wherein the apparatus may be configured to use the two receiver branches on at least one second frequency band, wherein determining that access on the network entity is not barred for the apparatus may comprise the example apparatus being further configured to: determine that the at least one first frequency band comprises, at least, a current frequency band of at least one cell the network entity provides; and determine that access to the at least one cell is not barred for the apparatus on the current frequency band.

The example apparatus may be further configured to: perform reception with one downlink multiple-input multiple-output layer using the one receiver branch.

The indication that access on the network entity is barred for the two receiver branches use may be comprised in a system information configured to indicate barring of the two-receiver branches use.

The example apparatus may be further configured to: ignore the indication that access on the network entity is barred for the two receiver branches use.

The indication that access on the network entity is not barred for the one receiver branch use may be comprised in a system information configured to indicate that using the one receiver branch is allowed or not barred.

The apparatus may comprise a reduced capability user equipment or an enhanced reduced capability user equipment.

In accordance with one aspect, an example method may be provided comprising: receiving, with a user equipment, an indication that an access on a network entity is barred for two receiver branches use; receiving an indication that access on the network entity is not barred for one receiver branch use; determining that the user equipment is configured to use the one receiver branch and the two receiver branches; and determining that access on the network entity is not barred for the user equipment.

The indication that the access on the network entity is barred for the two receiver branches use may comprise an indication that the access is barred for the two receiver branches use on at least one of: at least one frequency with respect to the network entity, or at least one cell the network entity provides.

The indication that the access on the network entity is not barred for the one receiver branch use may comprise an indication that the access is not barred for the one receiver branch use on at least one of: at least one frequency with respect to the network entity, or at least one cell the network entity provides.

The example method may further comprise at least one of: camping on a cell of the network entity in response to determining that access on the network entity is not barred for the user equipment; performing an access procedure with respect to the cell; transmitting, to the network entity, a radio resource control setup request; transmitting, to the network entity, a radio resource control resume request; transmitting, to the network entity, a radio resource control re-establishment request; or determining that access to the cell is allowed for the user equipment.

The example method may further comprise: using the one receiver branch.

The user equipment may be configured to use the one receiver branch on at least one first frequency band, wherein the user equipment may be configured to use the two receiver branches on at least one second frequency band, wherein the determining that access on the network entity is not barred for the user equipment may comprise: determining that the at least one first frequency band comprises, at least, a current frequency band of at least one cell the network entity provides; and determining that access to the at least one cell is not barred for the user equipment on the current frequency band.

The example method may further comprise: performing reception with one downlink multiple-input multiple-output layer using the one receiver branch.

The indication that access on the network entity is barred for the two receiver branches use may be comprised in a system information configured to indicate barring of the two-receiver branches use.

The example method may further comprise: ignoring the indication that access on the network entity is barred for the two receiver branches use.

The indication that access on the network entity is not barred for the one receiver branch use may be comprised in a system information configured to indicate that using the one receiver branch is allowed or not barred.

The user equipment may comprise a reduced capability user equipment or an enhanced reduced capability user equipment.

In accordance with one example embodiment, an apparatus may comprise: circuitry configured to perform: receiving, with a user equipment, an indication that an access on a network entity is barred for two receiver branches use; circuitry configured to perform: receiving an indication that access on the network entity is not barred for one receiver branch use; circuitry configured to perform: determining that the user equipment is configured to use the one receiver branch and the two receiver branches; and circuitry configured to perform: determining that access on the network entity is not barred for the user equipment.

In accordance with one example embodiment, an apparatus may comprise: processing circuitry; memory circuitry including computer program code, the memory circuitry and the computer program code configured to, with the processing circuitry, enable the apparatus to: receive an indication that an access on a network entity is barred for two receiver branches use; receive an indication that access on the network entity is not barred for one receiver branch use; determine that the apparatus is configured to use the one receiver branch and the two receiver branches; and determine that access on the network entity is not barred for the apparatus.

As used in this application, the term "circuitry" or "means" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (for example, firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: receiving an indication that an access on a network entity is barred for two receiver branches use; receiving an indication that access on the network entity is not barred for one receiver branch use; determining that the apparatus is configured to use the one receiver branch and the two receiver branches; and determining that access on the network entity is not barred for the apparatus.

The indication that the access on the network entity is barred for the two receiver branches use may comprise an indication that the access is barred for the two receiver branches use on at least one of: at least one frequency with respect to the network entity, or at least one cell the network entity provides.

The indication that the access on the network entity is not barred for the one receiver branch use may comprise an indication that the access is not barred for the one receiver branch use on at least one of: at least one frequency with respect to the network entity, or at least one cell the network entity provides.

The apparatus may further comprise means for performing at least one of: camping on a cell of the network entity in response to determining that access on the network entity is not barred for the apparatus; an access procedure with respect to the cell; transmitting, to the network entity, a radio resource control setup request; transmitting, to the network entity, a radio resource control resume request; transmitting, to the network entity, a radio resource control re-establishment request; or determining that access to the cell is allowed for the apparatus.

The apparatus may further comprise means for performing: using the one receiver branch.

The apparatus may be configured to use the one receiver branch on at least one first frequency band, wherein the apparatus may be configured to use the two receiver branches on at least one second frequency band, wherein the means for performing determining that access on the network entity is not barred for the apparatus may comprise means for performing: determining that the at least one first frequency band comprises, at least, a current frequency band of at least one cell the network entity provides; and determining that access to the at least one cell is not barred for the apparatus on the current frequency band.

The apparatus may further comprise means for performing: reception with one downlink multiple-input multiple-output layer using the one receiver branch.

The indication that access on the network entity is barred for the two receiver branches use may be comprised in a system information configured to indicate barring of the two-receiver branches use.

The apparatus may further comprise means for performing: ignoring the indication that access on the network entity is barred for the two receiver branches use.

The indication that access on the network entity is not barred for the one receiver branch use may be comprised in a system information configured to indicate that using the one receiver branch is allowed or not barred.

The apparatus may comprise a reduced capability user equipment or an enhanced reduced capability user equipment.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause receiving of an indication that an access on a network entity is barred for two receiver branches use; cause receiving of an indication that access on the network entity is not barred for one receiver branch use; determine that a user equipment is configured to use the one receiver branch and the two receiver branches; and determine that access on the network entity is not barred for the user equipment.

In accordance with one example embodiment, a non-transitory computer-readable medium comprising program instructions stored thereon for performing at least the following: causing receiving of an indication that an access on a network entity is barred for two receiver branches use; causing receiving of an indication that access on the network entity is not barred for one receiver branch use; determining that a user equipment is configured to use the one receiver branch and the two receiver branches; and determining that access on the network entity is not barred for the user equipment.

In accordance with another example embodiment, a non-transitory program storage device readable by a machine may be provided, tangibly embodying instructions executable by the machine for performing operations, the operations comprising: causing receiving of an indication that an access on a network entity is barred for two receiver branches use; causing receiving of an indication that access on the network entity is not barred for one receiver branch use; determining that a user equipment is configured to use the one receiver branch and the two receiver branches; and determining that access on the network entity is not barred for the user equipment.

In accordance with another example embodiment, a non-transitory computer-readable medium comprising instructions that, when executed by an apparatus, cause the apparatus to perform at least the following: causing receiving of an indication that an access on a network entity is barred for two receiver branches use; causing receiving of an indication that access on the network entity is not barred for one receiver branch use; determining that a user equipment is configured to use the one receiver branch and the two receiver branches; and determining that access on the network entity is not barred for the user equipment.

A computer implemented system comprising: at least one processor and at least one non-transitory memory storing instructions that, when executed by the at least one processor, cause the system at least to perform: causing receiving of an indication that an access on a network entity is barred for two receiver branches use; causing receiving of an indication that access on the network entity is not barred for one receiver branch use; determining that a user equipment is configured to use the one receiver branch and the two receiver branches; and determining that access on the network entity is not barred for the user equipment.

A computer implemented system comprising: means for causing receiving of an indication that an access on a network entity is barred for two receiver branches use; means for causing receiving of an indication that access on the network entity is not barred for one receiver branch use; means for determining that a user equipment is configured to use the one receiver branch and the two receiver branches; and means for determining that access on the network entity is not barred for the user equipment.

In accordance with one example embodiment, an apparatus may comprise: at least one processor; and at least one memory storing instructions that, when executed by the at least one processor, cause the apparatus at least to: transmit, to a user equipment, an indication that access on a network entity is barred for two receiver branches use; transmit, to the user equipment, an indication that access on the network entity is not barred for one receiver branch use; and receive, from the user equipment, an access request, wherein the user equipment may be configured to use the one receiver branch and the two receiver branches.

The indication that the access on the network entity is barred for the two receiver branches use may comprise an indication that the access is barred for the two receiver branches use on at least one of: at least one frequency with respect to the network entity, or at least one cell the network entity provides.

The indication that the access on the network entity is not barred for the one receiver branch use may comprise an indication that the access is not barred for the one receiver branch use on at least one of: at least one frequency with respect to the network entity, or at least one cell the network entity provides.

The indication that access on the network entity is barred for the two receiver branches use may be comprised in a system information configured to indicate barring of the two-receiver branches use.

The indication that access on the network entity is not barred for the one receiver branch use may be comprised in a system information configured to indicate that using the one receiver branch is allowed or not barred.

The user equipment may comprise a reduced capability user equipment or an enhanced reduced capability user equipment.

The access request may comprise at least one of: a radio resource control setup request, a radio resource control resume request, or a radio resource control re-establishment request.

In accordance with one aspect, an example method may be provided comprising: transmitting, with a base station to a user equipment, an indication that access on a network entity is barred for two receiver branches use; transmitting, to the user equipment, an indication that access on the network entity is not barred for one receiver branch use; and receiving, from the user equipment, an access request, wherein the user equipment may be configured to use the one receiver branch and the two receiver branches.

The indication that the access on the network entity is barred for the two receiver branches use may comprise an indication that the access is barred for the two receiver branches use on at least one of: at least one frequency with respect to the network entity, or at least one cell the network entity provides.

The indication that the access on the network entity is not barred for the one receiver branch use may comprise an indication that the access is not barred for the one receiver branch use on at least one of: at least one frequency with respect to the network entity, or at least one cell the network entity provides.

The indication that access on the network entity is barred for the two receiver branches use may be comprised in a system information configured to indicate barring of the two-receiver branches use.

The indication that access on the network entity is not barred for the one receiver branch use may be comprised in a system information configured to indicate that using the one receiver branch is allowed or not barred.

The user equipment may comprise a reduced capability user equipment or an enhanced reduced capability user equipment.

The access request may comprise at least one of: a radio resource control setup request, a radio resource control resume request, or a radio resource control re-establishment request.

In accordance with one example embodiment, an apparatus may comprise: circuitry configured to perform: transmitting, with a base station to a user equipment, an indication that access on a network entity is barred for two receiver branches use; circuitry configured to perform: transmitting, to the user equipment, an indication that access on the network entity is not barred for one receiver branch use; and circuitry configured to perform: receiving, from the user equipment, an access request, wherein the user equipment may be configured to use the one receiver branch and the two receiver branches.

In accordance with one example embodiment, an apparatus may comprise: processing circuitry; memory circuitry including computer program code, the memory circuitry and the computer program code configured to, with the processing circuitry, enable the apparatus to: transmit, to a user equipment, an indication that access on a network entity is barred for two receiver branches use; transmit, to the user equipment, an indication that access on the network entity is not barred for one receiver branch use; and receive, from the user equipment, an access request, wherein the user equipment may be configured to use the one receiver branch and the two receiver branches.

In accordance with one example embodiment, an apparatus may comprise means for: transmitting, to a user equipment, an indication that access on a network entity is barred for two receiver branches use; transmitting, to the user equipment, an indication that access on the network entity is not barred for one receiver branch use; and receiving, from the user equipment, an access request, wherein the user equipment may be configured to use the one receiver branch and the two receiver branches.

The indication that the access on the network entity is barred for the two receiver branches use may comprise an indication that the access is barred for the two receiver branches use on at least one of: at least one frequency with respect to the network entity, or at least one cell the network entity provides.

The indication that the access on the network entity is not barred for the one receiver branch use may comprise an indication that the access is not barred for the one receiver branch use on at least one of: at least one frequency with respect to the network entity, or at least one cell the network entity provides.

The indication that access on the network entity is barred for the two receiver branches use may be comprised in a system information configured to indicate barring of the two-receiver branches use.

The indication that access on the network entity is not barred for the one receiver branch use may be comprised in a system information configured to indicate that using the one receiver branch is allowed or not barred.

The user equipment may comprise a reduced capability user equipment or an enhanced reduced capability user equipment.

The access request may comprise at least one of: a radio resource control setup request, a radio resource control resume request, or a radio resource control re-establishment request.

In accordance with one example embodiment, a non-transitory computer-readable medium comprising instructions stored thereon which, when executed with at least one processor, cause the at least one processor to: cause transmitting, to a user equipment, of an indication that access on a network entity is barred for two receiver branches use; cause transmitting, to the user equipment, of an indication that access on the network entity is not barred for one receiver branch use; and cause receiving, from the user equipment, of an access request, wherein the user equipment may be configured to use the one receiver branch and the two receiver branches.

In accordance with one example embodiment, a non-transitory computer-readable medium comprising program instructions stored thereon for performing at least the following: causing transmitting, to a user equipment, of an indication that access on a network entity is barred for two receiver branches use; causing transmitting, to the user equipment, of an indication that access on the network entity is not barred for one receiver branch use; and causing receiving, from the user equipment, of an access request, wherein the user equipment may be configured to use the one receiver branch and the two receiver branches.

In accordance with another example embodiment, a non-transitory program storage device readable by a machine may be provided, tangibly embodying instructions executable by the machine for performing operations, the operations comprising: causing transmitting, to a user equipment, of an indication that access on a network entity is barred for two receiver branches use; causing transmitting, to the user equipment, of an indication that access on the network entity is not barred for one receiver branch use; and causing receiving, from the user equipment, of an access request, wherein the user equipment may be configured to use the one receiver branch and the two receiver branches.

In accordance with another example embodiment, a non-transitory computer-readable medium comprising instructions that, when executed by an apparatus, cause the apparatus to perform at least the following: causing transmitting, to a user equipment, of an indication that access on a network entity is barred for two receiver branches use; causing transmitting, to the user equipment, of an indication that access on the network entity is not barred for one receiver branch use; and causing receiving, from the user equipment, of an access request, wherein the user equipment may be configured to use the one receiver branch and the two receiver branches.

A computer implemented system comprising: at least one processor and at least one non-transitory memory storing instructions that, when executed by the at least one processor, cause the system at least to perform: causing transmitting, to a user equipment, of an indication that access on a network entity is barred for two receiver branches use; causing transmitting, to the user equipment, of an indication that access on the network entity is not barred for one receiver branch use; and causing receiving, from the user equipment, of an access request, wherein the user equipment may be configured to use the one receiver branch and the two receiver branches.

A computer implemented system comprising: means for causing transmitting, to a user equipment, of an indication that access on a network entity is barred for two receiver branches use; means for causing transmitting, to the user equipment, of an indication that access on the network entity is not barred for one receiver branch use; and means for causing receiving, from the user equipment, of an access request, wherein the user equipment may be configured to use the one receiver branch and the two receiver branches.

The term "non-transitory," as used herein, is a limitation of the medium itself (for example tangible, not a signal) as opposed to a limitation on data storage persistency (for example, RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. A user equipment supporting one receiver branch and two receiver branches, the user equipment comprising means for performing:
receiving an indication that a cell of a network entity is barred for use of the two receiver branches at the user equipment;
receiving an indication that the cell of the network entity is not barred for use of the one receiver branch at the user equipment;
based on the indications, camping on the cell of the network entity.

2. The user equipment of claim 1, comprising means for performing:
determining that the cell of the network entity is allowed for the user equipment.

3. The user equipment of claim 2, wherein the user equipment is configured to camp on the cell in response to determining that the cell of the network entity is allowed for the user equipment.

4. The user equipment of any of claims 1 through 3, wherein the indication that the cell of the network entity is barred for use of the two receiver branches comprises an indication that the cell of the network entity is barred for use of the two receiver branches on at least one frequency with respect to the cell of the network entity.

5. The user equipment of any of claims 1 through 4, wherein the indication that the cell of the network entity is not barred for use of the one receiver branch comprises an indication that the cell of the network entity is not barred for use of the one receiver branch on at least one frequency with respect to the cell of the network entity.

6. The user equipment of any of claims 1 through 5, wherein the user equipment further comprises means for performing at least one of:
an access procedure with respect to the cell of the network entity;
transmitting, to the network entity, a radio resource control setup request;
transmitting, to the network entity, a radio resource control resume request;
transmitting, to the network entity, a radio resource control re-establishment request.

7. The user equipment of any of claims 1 through 6, wherein the user equipment comprises means for performing:
using only the one receiver branch for camping on the cell.

8. The user equipment of any of claims 1 through 7, wherein the user equipment is configured to use the one receiver branch on at least one first frequency band, wherein the user equipment is configured to use the two receiver branches on at least one second frequency band, wherein the user equipment comprises means for performing:
determining that the at least one first frequency band comprises a current frequency band of the cell of the network entity provides; and
determining that the cell of the network entity is allowed for the user equipment on the current frequency band.

9. The user equipment of any of claims 1 through 8, wherein the user equipment comprises means for performing:
reception with one downlink multiple-input multiple-output layer using the one receiver branch.

10. The user equipment of any of claims 1 through 9, wherein the indication that the cell of the network entity is barred for use of the two receiver branches is comprised in a system information configured to indicate barring of use of the two receiver branches.

11. The user equipment of any of claims 1 through 10, wherein the user equipment further comprises means for performing:
ignoring the indication that the cell of the network entity is barred for use of the two receiver branches.

12. The user equipment of any of claims 1 through 11, wherein the indication that the cell of the network entity is not barred for use of the one receiver branch is comprised in a system information configured to indicate that using the one receiver branch is allowed or not barred.

13. The user equipment of any of claims 1 through 12, wherein the user equipment comprises a reduced capability user equipment or an enhanced reduced capability user equipment.

14. A method comprising:
receiving, by a user equipment supporting one receiver branch and two receiver branches, an indication that a cell of a network entity is barred for use of the two receiver branches at the user equipment;
receiving an indication that the cell of the network entity is not barred for use of the one receiver branch at the user equipment;
based on the indications, camping on the cell of the network entity.

15. A network entity comprising means for performing:
transmitting, to a user equipment supporting one receiver branch and two receiver branches, an indication that a cell of the network entity is barred for use of the two receiver branches;
transmitting, to the user equipment, an indication that the cell of the network entity is not barred for use of the one receiver branch; and
receiving an access request from the user equipment.

16. A method comprising:
transmitting, to a user equipment supporting one receiver branch and two receiver branches, an indication that a cell of the network entity is barred for use of the two receiver branches;
transmitting, to the user equipment, an indication that a cell of the network entity is not barred for use of the one receiver branch; and
receiving an access request from the user equipment.
